Europäisches Patentamt

European Patent Office

Office européen des brevets

(19)

(11) Veröffentlichungsnummer: **0 362 422**
**A1**

(12) # EUROPÄISCHE PATENTANMELDUNG

(21) Anmeldenummer: **88116442.0**

(22) Anmeldetag: **05.10.88**

(51) Int. Cl.5: **B65G 69/28**

(43) Veröffentlichungstag der Anmeldung:
**11.04.90 Patentblatt 90/15**

(84) Benannte Vertragsstaaten:
**AT BE CH DE FR LI NL SE**

(71) Anmelder: **Gebrüder Frech AG**
**Gewerbestrasse 4**
**CH-4450 Sissach(CH)**

(72) Erfinder: **Maier, Andreas J.**
**Reuslistrasse 44**
**CH-4450 Sissach(CH)**

(74) Vertreter: **Feldmann, Clarence Paul et al**
**c/o Patentanwaltsbüro FELDMANN AG**
**Postfach Kanalstrasse 17**
**CH-8152 Glattbrugg(CH)**

(54) **Hydraulisch betriebene Ueberfahrbrücke.**

(57) Die Ueberfahrbrücke dient dem Laden oder Entladen eines nahe an die Rampe (1) herangefahrenen Lastwagens. Beim Betrieb wird die Brückenplatte (3) zuerst angehoben und die Verlängerung (5) ausgefahren. Danach wird sie abgesenkt bis die Verlängerung auf dem Lastwagenboden aufliegt. Beim Einziehen wird die Brücke zuerst und danach die Verlängerung (5) eingezogen. Damit das Zurückziehen erst nach dem Anheben stattfindet ist in der Druckleitung (10) zum Zylinder (8) ein Durchflussregler (13) eingebaut. Der Endschalter (72) stoppt die Einzugbewegung der Endschalter (73) zeigt an, dass die knickbare Stütze (61-63) gestreckt ist und der Endschalter (71) zeigt an, dass die Brücke sich in der Ruhelage befindet und die Druckmittelpumpe abgeschaltet und der Druck abegelassen werden kann.

FIG. 1

## HYDRAULISCH BETRIEBENE UEBERFAHRBRUECKE

Die vorliegende Erfindung betrifft eine Ueberfahrbrücke für Rampen mit einer an der Rampe schwenkbar gelagerten Brückenplatte und einer am freien Ende der Brückenplatte ein- und ausfahrbar angeordneten Verlängerung zur Auflage auf der zu be- beziehungsweise entladenden Plattform, wobei die Brückenplatte und die Verlängerung, welche mit einer Stütze versehen ist, die in der Ruhestellung der Ueberfahrbrücke auf einem ortsfesten Widerlager aufliegt, durch Druckmittelzylinder bewegbar sind, und beim Einfahren der Verlängerung der Druckmittelzylinder für die Brückenplatte zusammen mit dem Druckmittelzylinder für die Verlängerung an Druckleitungen angeschlossen sind, die von einer gemeinsamen Quelle gespiesen werden. Aus der DE-PS 23 21 033 ist eine Ueberfahrbrücke für Rampen wie oben beschrieben bekannt. Allerdings sind hier in den Druckleitungen, die von der gemeinsamen Druckwelle zu den Druckmittelzylindern an der Verlängerung und der Brückenplatte führen, keine durchflussregelnde Mittel angeordnet. Die Anmelderin hat selber jedoch solche Mittel bereits eingesetzt an Ueberfahrbrücken, die im Aufbau der Brücke, die in der CH-PS 348 650 beschrieben ist, entspricht.

Die Ueberfahrbrücke gemäss der DE-PS 23 21 033 benützt die Stütze, die an der Verlängerung vorgesehen ist, zusammen mit dem ortsfesten Widerlager, als Steuerungsmittel bei der Rückführung der Ueberfahrbrücke in die Ruhestellung. Hierbei geht man von der Ueberlegung aus, dass bei dem geringeren Widerstand des Druckmittelzylinders für die Verlängerung diese zuerst bewegt wird, bevor der Druckmittelzylinder für die Brückenplatte zu arbeiten vermag. Hat der Druckmittelzylinder für die Verlängerung somit diese soweit eingezogen, dass die Stütze am ortsfesten Widerlager anliegt, so wird der Druckmittelzylinder für die Brückenplatte in gehörigerweise beaufschlagt, wodurch nunmehr eine Verschwenkung der Brückenplatte eintritt, bis das untere Ende der Stütze die Höhe des ortsfesten Widerlagers erreicht hat, worauf der Druckmittelzylinder der Verlängerung diese in ihrer Ruhelage zu ziehen vermag, worauf der hydraulische Antrieb über einen Endschalter abgeschaltet wird. Eine derartige Rückführung der Ueberfahrbrücke aus ihrer Gebrauchslage in die Ruhestellung besteht aus drei Bewegungskomponenten, nämlich:

1. Rückziehen der Verlängerung bis zum Anschlag der Stütze an das Widerlager,

2. Hochschwenken der Brückenplatte, bis die Stütze das Niveau des Widerlagers erreicht hat, und

3. Rückziehen der Verlängerung in die Ruhestellung, bei der sich die Stütze auf das Widerlager abstützt.

Da das Gefahrenelement während der Rückführung der Ueberfahrbrücke von der Gebrauchslage in die Ruhestellung relativ hoch ist, ist man bestrebt, diese Zeit möglichst kurz zu halten. Die Ueberfahrbrücke gemäss der DE-PS 23 21 033 vermag diese Aufgabe nicht zu erfüllen. Unerwünscht ist ferner, dass die beim Hochschwenken der Brückenplatte ständig anliegenden Kräfte des Druckmittelzylinders an der Verlängerung auch in der Konstruktion der Ueberfahrbrücke aufgefangen werden müssen.

Die Anmelderin hat dies erkannt und bereits in einer früheren, auf dem Markt erhältlichen Ausführung, dem dadurch entgegengewirkt, dass sie in die Druckleitung zum Druckmittelzylinder an der Verlängerung eine Blende ein gebaut hat. Dadurch laufen die beiden Bewegungen, nämlich der Rückzug der Verlängerung und die Schwenkbewegung der Brückenplatte, synchron ab. Die benötigte Zeit für die Rückführung wurde damit verkürzt. In den ungünstigen Lagen, bei denen die Brückenplatte weit nach unten geschwenkt, und die Verlängerung nur minimal ausgefahren ist, trat jedoch der gleiche unerwünschte Steuereffekt wie bei der Ueberfahrbrücke gemäss der DE-PS 23 21 033 auf.

Es ist daher die Aufgabe der vorliegenden Erfindung, eine Ueberfahrbrücke der eingangs genannten Art derart zu verbessern, dass immer eine optimale Rückführbewegung der Brückenplatte möglich ist, wobei ferner eine Steuerfunktion der Stütze während der Rückführbewegung vermieden werden soll.

Diese Aufgabe löst eine Ueberfahrbrücke gemäss Oberbegriff des Patentanspruches 1 mit den Merkmalen des kennzeichnenden Teiles.

Die erfindungsgemässe Ausführung erlaubt es, auch bekannte Lastwagen Anwesenheit-Kontrollvorrichtungen gefahrlos anzuwenden.

In der Zeichnung ist ein Ausführungsbeispiel des Erfindungsgegenstandes dargestellt und anhand der nachfolgen den Beschreibung erläutert.

Es zeigt:

Fig. 1 die erfindungsgemässe Ueberfahrbrücke in der Ruhelage in eingebautem Zustand in einer Rampe;

Fig. 2 zeigt schematisch die Rückzugbewegung der Ueberfahrbrücke aus einer Lage unterhalb der Ruhestellung.

Ueberfahrbrücken sind Metallkonstruktionen, die in Verladerampen 1, beispielsweise von Lagerhäusern, eingebaut werden. Hierzu sind in den Rampen 1 entsprechende Nischen 2 ausgespart. Eine solche Ueberfahrbrücke hat eine relativ grosse Brückenplatte 3, die mittels eines Scharniers 4 an der Rampe schwenkbar gelagert ist. Am freien Ende der Brückenplatte 3 ist eine ein- und ausfahrbar angeordnete Verlängerung 5 zur Auflage auf der zu be- beziehungweise entladenden Plattform eines vor der Rampe 1 stehenden Lastwagens vorgesehen. Die Verlängerung 5 ist ein Schlitten, der unterhalb der Brückenplatte 3 in Schienen gelagert ist. An der Verlängerung 5 ist eine Stütze 6 fest montiert. In der Ruhelage der Ueberfahrbrücke liegt die Stütze 6 auf einem ortsfesten Widerlager 7 auf. Die Ein- und Ausfahrbewegungen der Verlängerung 5 erfolgen mittels eines Druckmittelzylinders 8, der unterhalb der schwenkbar gelagerten Brückenplatte 3 angeordnet ist. Die Hebe-, beziehungsweise Senkbewegung der Brückenplatte 3 erfolgt mittels eines Druckmittelzylinders 9, welcher einerseits am ortsfesten Widerlager 7, andrerseits an der Brückenplatte 3 schwenkbar angeordnet ist. Eine Druckleitung 10 zum Druckmittelzylinder 8 der Verlängerung 5 und eine Druckleitung 11 zum Druckmittelzylinder 9 der Brückenplatte 3 sind an einer gemeinsamen Druckquelle 12 angeschlossen. Der in der Druckquelle 12 erzeugte Druck wirkt sich somit auf beide Druckleitungen 10 und 11 gleichermassen aus. Ohne zusätzliche Mittel würde somit die Verlängerung 5, die einen erheblich geringeren Kraftaufwand bedarf, zuerst zurückgezogen werden, bevor der Druckmittelzylinder 9 die Brückenplatte 3 anheben würde. Um dies zu vermeiden, ist in der Druckleitung 10, die den Durckmittelzylinder 8 der Verlängerung 5 betätigt, ein durchflussregelndes Mittel 13 vorgesehen. Im einfachsten Fall ist dieses druckflussregelnde Mittel 13 eine Blende. Es wäre jedoch durchaus denkbar, statt der Blende ein nach der Massgabe des Neigungswinkels der Brückenplatte 3 und der Ausfahrdistanz der Verlängerung 5 gesteuertes Regelventil einzusetzen.

Die Stütze 6 ist erfindungsgemäss zweigeteilt. Sie besteht aus einem starr an der Verlängerung 5 angebrachten Stützbein 61 und einem über ein Scharnier 62 mit dem Stützbein 61 gelenkig verbundenen Stützfuss 63. Das Scharnier 62 zwischen dem Stützbein 61 und dem Stützfuss 63 ist an deren vorderen, zum freien Ende der Brückenplatte 3 gelegenen Kanten angeordnet. Der Stützfuss 63 kann somit lediglich nach vorne wegschwenken. Befindet sich die Ueberfahrbrücke in einer Gebrauchslage, bei der die Brückenplatte 3 unterhalb des Niveaus der Rampenoberfläche 13 und die Verlängerung 5 mindestens teilweise ausgefahren ist, so erfolgt der Rückzug der Ueberfahrbrücke in die Ruhelage wie nachfolgend beschrieben.

Die Druckquelle 12 erzeugt einen Druck in den Druckleitungen 10 und 11, die zu den Druckmittelzylindern 8 und 9 führen. Wegen des durchflussregelnden Mittels 13 ist der am Druckmittelzylinder 8 anliegende Druck erheblich kleiner als der am

anliegende Druck. Folglich vermögen beide Zylinder 8 und 9 synchron zu arbeiten. Dies bedeutet, dass sich gleichzeitig die Brückenplatte 3 hebt und die Verlängerung 5 einfährt. Sobald der Stützfuss 63 auf dem ortsfesten Widerlager aufsteht, wird über einen Endschalter 71 die Druckquelle 12 abgeschaltet. Die Zufuhr zur Druckleitung 10 wird durch einen Endschalter 72 abgeschaltet, wenn die Verlängerung 5 ihre vollständig eingefahrene Lage erreicht hat. Ein dritter Endschalter 73 am Stützbein 61 überwacht die Lage des Stützfusses 63. Sind sowohl der Endschalter 72 sowie der Endschalter 73 geschlossen, so ist die Verlängerung vollständig eingefahren und der Stützfuss 63 befindet sich senkrecht über dem ortsfesten Widerlager 7. Folglich wird die Druckleitung 11 zum Druckmittelzylinder 9 geschlossen und die Brückenplatte 3 senkt sich ab, bis der Stützfuss 63 auf dem ortsfesten Widerlager 7 aufliegt und der Endschalter 71 schliesslich die Druckquelle 12 abschaltet. Auf die hierfür erforderlichen hydraulischen Steuerventile wird nicht weiter eingegangen, weil diese auf dem Markt handelsüblich erhältlich sind. Sämtliche Endschalter können in der Reihenfolge 72,73, 71 mittels einer logischen Und-Schaltung miteinander verbunden werden.

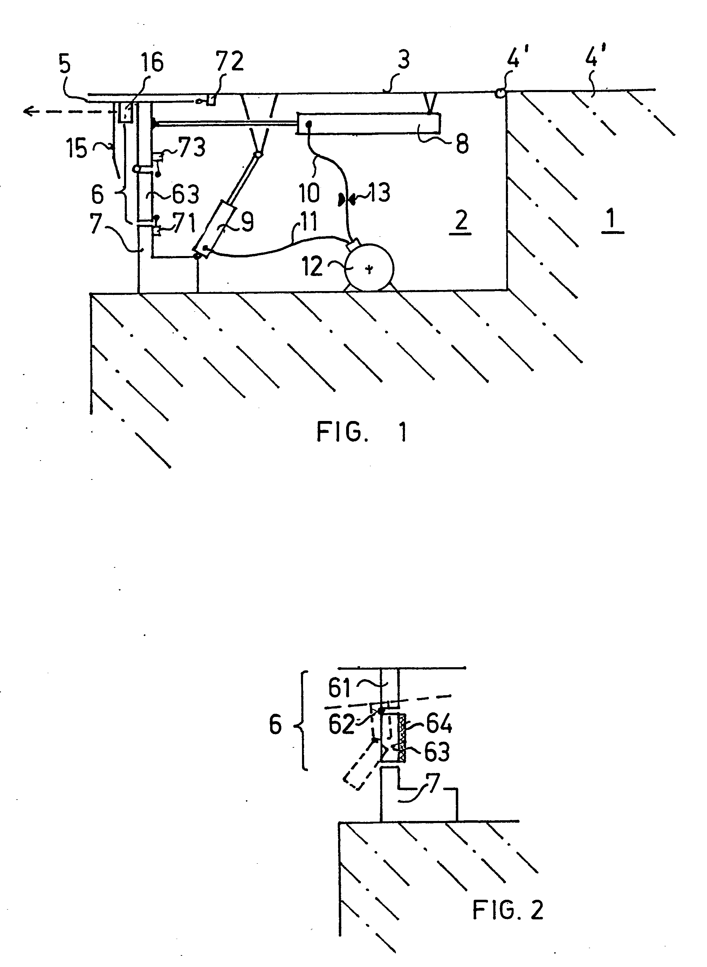

Wie in Figur 2 dargestellt, kann der Stützfuss 63 rampenseitig mit einer Stossleiste 64 versehen werden. Die Stossleiste 64 wirkt geräuschdämmend und verschleissmindernd. Als Materialien für die Stossleiste 64 kommem sowohl Kautschukmischungen wie Kunststoffstreifen in Frage.

Die erfindungsgemässe Ueberfahrbrücke kommt auch ohne durchflussregelndes Mittel 13 aus. Die Schaltung bleibt dabei dieselbe. Die Zeit für die Rückführbewegung wird dadurch etwas verlängert.

Am freien Ende der Brückenplatte 3 ist eine Schürze 15 vorzugsweise angeschweisst. Diese dient als Schutz vor Verletzungen sowie zur Versteifung der Stahlkonstruktion. Dahinter ist im Bereich eines Durchbruches ein berührungsloser Schalter 16 angeordnet. Dieser Schalter 16 stellt die Anwesenheit eines Lastwagens fest. Ist ein Lastwagen im Schaltbereich, so kann die Ueberfahrbrücke nur manuell gesteuert, und damit unter Aufsicht einer Bedienungsperson, zurückgefahren werden. Fährt jedoch ein Lastwagen von der Rampe weg, und dies geschieht oftmals ohne Anwesenheit einer Bedienungsperson, so läuft die automatische Rückführung wie oben beschrieben ab. Damit ist eine grosse Sicherheit gewährleistet, weil einerseits die Ueberfahrbrücke nicht in der gefährlichen, von der Ruhelage abweichenden Position verbleibt und andrerseits weil die Ruckführung schnell und ohne Ueberwachung geschehen kann.

**Ansprüche**

1. Ueberfahrbrücke für Rampen mit einer an der Rampe schwenkbar gelagerten Brückenplatte und einer am freien Ende der Brückenplatte ein- und ausfahrbar angeordneten Verlängerung zur Auflage auf der zu be-beziehungsweise entladenden Plattform, wobei die Brückenplatte und die Verlängerung, welche mit einer Stütze versehen ist, die in der Ruhestellung der Ueberfahrbrücke auf einem ortsfesten Widerlager aufliegt, durch Druckmittelzylinder bewegbar sind und beim Einfahren der Verlängerung der Druckmittelzylinder für die Brückenplatte zusammen mit dem Durckmittelzylinder für die Verlängerung an Druckleitungen angeschlossen sind, die von einer gemeinsamen Druckquelle gespiesen werden, dadurch gekennzeichnet, dass die Stütze (6) zweigeteilt aus einem starr mit der Verlängerung (5) verbundenen Stützbein (61) und einem über ein Scharnier (62) damit verbundenen Stützfuss (63) besteht, wobei ein Endschalter (71) die Relativlage des Stützfusses (63) zum ortsfesten Widerlager (7), ein zweiter Endschalter (72) die Endlage der Verlängerung (5) und ein dritter Endschalter (73) die Relativlage des Stützfusses (63) zum Stützbein (61) überwacht.

2. Ueberfahrbrücke nach Anspurch 1, dadurch gekennzeichnet, dass in der Druckleitung (10) von der gemeinsamen Druckquelle (12) zum Druckmittelzylinder (8) an der Verlängerung (5) ein durchflussregelndes Mittel (13) angeordnet ist.

3. Ueberfahrbrücke nach Anspruch 2, dadurch gekennzeichnet, dass das durchflussregelnde Mittel (13) eine Blende ist.

4. Ueberfahrbrücke nach Anspruch 1, dadurch gekennzeichnet, dass am Stützfuss (63) eine geräuschdämmende und verschleissmindernde Stossleiste angebracht ist.

5. Ueberfahrbrücke nach Anspruch 1, dadurch gekennzeichnet, dass am freien Ende der Brückenplatte (3) eine Schürze (15) vorhanden ist, und dass die Länge des Stützbeins (61) mindestens annähernd der Höhe der Schürze (15) entspricht.

6. Ueberfahrbrücke nach Anspruch 5, dadurch gekennzeichnet, dass hinter der Schürze (15) vor einem Durchbruch in derselben ein berührungsloser Ueberwachungsschalter (16) angebracht ist, der die Anwesenheit eines zu be- beziehungsweise entladenden Lastwagens feststellt und die Druckquelle (12) entsprechend betätigt.

FIG. 1

FIG. 2

# EUROPÄISCHER RECHERCHENBERICHT

Europäisches Patentamt

Nummer der Anmeldung

EP 88 11 6442

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| D,Y | DE-A-2 321 033 (ALTEN) <br> * Insgesamt * <br> --- | 1-3 | B 65 G 69/28 |
| Y | US-A-3 175 238 (PENNINGTON) <br> * Insgesamt * <br> --- | 1-3 | |
| D,A | CH-A- 348 650 (FRECH) <br> * Insgesamt * <br> --- | 1,4 | |
| A | US-A-4 010 571 (McGUIRE) <br> * Insgesamt * <br> ----- | 1,5,6 | |

|  | RECHERCHIERTE SACHGEBIETE (Int. Cl.3) |
|---|---|
|  | B 65 G |

Der vorliegende Recherchenbericht wurde für alle Patentansprüche erstellt

| Recherchenort | Abschlußdatum der Recherche | Prüfer |
|---|---|---|
| DEN HAAG | 05-06-1989 | WERNER D.M. |